## Europäisches Patentamt

## European Patent Office

## Office européen des brevets

(19)

(11) Veröffentlichungsnummer: **0 068 181**
**B1**

(12)

# EUROPÄISCHE PATENTSCHRIFT

(45) Veröffentlichungstag der Patentschrift:
24.08.88

(51) Int. Cl.⁴: **G 01 F 11/26**

(21) Anmeldenummer: **82104944.2**

(22) Anmeldetag: **05.06.82**

(54) **Gerät zur dosierten Ausgabe von Flüssigkeit.**

(30) Priorität: 27.06.81 DE 3125349
17.04.82 DE 3214186

(43) Veröffentlichungstag der Anmeldung:
05.01.83 Patentblatt 83/1

(45) Bekanntmachung des Hinweises auf die Patenterteilung:
24.08.88 Patentblatt 88/34

(84) Benannte Vertragsstaaten:
AT BE CH DE FR GB IT LI LU NL SE

(56) Entgegenhaltungen:
FR - A - 798 049
FR - A - 1 404 641
FR - A - 2 360 872
GB - A - 497 199
US - A - 3 148 801

Die Akte enthält technische Angaben, die nach dem Eingang der Anmeldung eingereicht wurden und die nicht in dieser Patentschrift enthalten sind.

(73) Patentinhaber: Weener Plastik GmbH & Co. KG,
Industriestr. 1, D-2952 Weener-Ems (DE)

(72) Erfinder: Steiner, Walter, Milchweg 12,
D-2950 Leer/Heisfelde (DE)
Erfinder: Fudalla, Manfred, Tichelwarfer Strasse 21,
D-2952 Weener/Holthausen (DE)

(74) Vertreter: Rieder, Hans-Joachim, Dr.,
Corneliusstrasse 45 Postfach 11 04 51,
D-5600 Wuppertal 11 (DE)

## Beschreibung

Die Erfindung bezieht sich auf ein Gerät zur dosierten Ausgabe von Flüssigkeit gemäss den Merkmalen des Oberbegriffs des Anspruches 1.

Geräte zur Abgabe abgemessener Mengen flüssigen Füllinhalts sind beispielsweise in Form von sogenannten Tropfenspendern bekannt, die auf dem medizinischen und auch Kosmetik-Sektor gewisse Verbreitung gefunden haben. Die Abgabe erfolgt unter Kippen des Behälters, wobei je nach der Fliessfähigkeit des Füllinhaltes dann in zeitlich mehr oder weniger grossen Abständen die Tropfenfolge einsetzt.

Bei einem bekannten Gerät der oben bezeichneten Art (vgl. US-A-3 148 801) ist der Luftausgleich für die Dosierkammer durch ein deren Boden durchsetzendes Luftrohr realisiert. Dieses Entlüften findet beim Fluten der Dosierkammer statt. Das vorratsbehälterseitige Ende des Luftrohres steht zu diesem in strömungstechnischen Anschluss. In dieser Flutstellung ist die Dosierkammer zur Ausgusskammer hin verschlossen. Eine Verbindung zwischen Dosierkammer und Aussenluft besteht somit nicht. Daher können bei diesem bekannten Gerät bei der Ausgabe von Flüssigkeit unerwünschte Unterdruck-Verhältnisse auftreten, welche zu Ausgabestörungen führen. Der freie Fluss der im Vorratsbehälter vorhandenen Flüssigkeit in die Dosierkammer wird gebremst. Der gewünschte Füllgrad kann so nicht in jedem Fall erreicht werden.

Darüber hinaus weist dieses bekannte Gerät auch einen relativ komplizierten Aufbau auf.

Der Erfindung stellt sich daher das technische Problem, ein Gerät der zuvor bezeichneten Art in herstellungstechnisch einfacher, gebrauchszuverlässiger Weise so auszubilden, dass stets gleiche Mengen praktisch schlagartig, d. h. ohne Zeitverzögerung sicher ausgegeben werden.

Dieses Problem ist durch die in den Ansprüchen 1 und 5 angegebenen Merkmale gelöst.

Die abhängigen Ansprüche kennzeichnen vorteilhafte Weiterbildungen des erfindungsgemässen Gerätes.

Zufolge solcher Ausgestaltung ist ein herstellungstechnisch einfaches, gebrauchsvorteilhaftes Gerät zur dosierten Ausgabe von Flüssigkeiten erreicht: Es wird von einem topfförmigen Gehäuse ausgegangen, das durch eine mittelständige Querwand in eine obere Dosierkammer und eine untere Ausgusskammer unterteilt ist. Entsprechend liegt eine raumsparende, leicht herstellbare Bauform vor, die zufolge der unmittelbaren Nachbarschaftslage der beiden Kammern zudem eine gute Dosierleistung erbringt. Die portionsweise auszugebende Flüssigkeit schiesst aus dem Vorratsbehälter in die Dosierkammer. Die abgeteilte Menge läuft beim Aufstellen des Gerätes in die normale Standstellung in die Ausgusskammer. Die hier angesammelte Menge wird bei erneuter Tieflage des Mündungsrohres restfrei durch das Mündungsrohr hindurch ausgegeben, wobei sich aber die Dosierkammer erneut füllt. Das Mündungsrohr erstreckt sich aufwärtsgerichtet ausgehend von der mit einem Durchflussloch zur Ausgusskammer versehenen Querwand, welche selbst von einem oberhalb der Querwand mündenden Zulaufrohr durchsetzt ist. Der Luftaustausch wird über ein die Querwand ebenfalls durchsetzendes Luftrohr erzielt. Dieses reicht bis in die Dosierkammer und kontrolliert quasi als Tauchrohr fungierend die Dosiermenge. Der Dosierraum steht mit der Aussenluft in Verbindung. In vorteilhafter Weise erstreckt sich das Luftrohr parallel zum Zulaufrohr. Für eine störungsfreie Funktion erweist es sich dabei als günstig, dass der Dosierkammer eine in Nähe der Querwand endende Lufteinlassöffnung zugeordnet ist, die von einem die Decke des Gehäuses durchsetzenden Röhrchen gebildet ist. Dieses Röhrchen kann als Originalverschluss genutzt werden. Der über die Decke stehende Rohrabschnitt mus abgeschnitten werden. Hiernach ist erst eine Ingebrauchnahme des Gerätes möglich. In vorteilhafter Weise ist die Ausgusskammer als Ringkammer gestaltet, was bedeutet, dass sich das die mittelständige Querwand durchsetzende Zulaufrohr im Zentrum des Gehäuses befindet. Dabei ist bezüglich der Lage der übrigen Rohre bzw. Öffnungen so vorgegangen, dass Mündungsrohr, Zulaufrohr, Luftrohr und Lufteinlassöffnung in Schüttstellung gesehen in der aufgeführten Reihenfolge, die lotrechte Längsmittelebene des Gerätes schneidend, übereinanderliegen. Dabei nimmt das Mündungsrohr die tiefste und die Lufteinlassöffnung die höchste Lage ein. Aus spritztechnischen Gründen ist ein zweiteiliger Aufbau mit Teilungsfuge im mittelständigen Querwandbereich nützlich. Eine baulich vorteilhafte Ausgestaltung, bei der sogar auf eine besondere Lufteinlassöffnung verzichtet werden kann, ist dadurch erreicht, dass Dosierkammer und Mündungsrohr konzentrisch zueinander und im topfförmigen Gehäuse angeordnet sind und sich das Durchflussloch quergerichtet in der Dosierkammerwand befindet. Dabei wirkt es sich insbesondere stabilisierend und für das Entformen günstig aus, dass die Querwand in zwei unterschiedlichen Ebenen verläuft. Es kann von einer geringen, daher materialsparenden Wandungsdicke ausgegangen werden. Die bauliche Massnahme, dass die zentralliegende Ausgusskammer patronenförmig über die Unterseite des topfförmigen Gehäuses vorsteht, erleichtert die Zuordnung und führt zu einer niedrigen Höhe für den direkt sichtbaren Teil des Geräts. Das Mündungsende des Luftrohres endet kurz unterhalb der Decke des topfförmigen Gehäuses und dient so als ein die Dosier-Zulaufmenge begrenzendes Absperrorgan. Dadurch, das das zentrale Mündungsrohr entfernt von einer fest anscharnierten Verschlusskappe angeordnet ist, deren Scharnier auf derjenigen Seite des Mündungsrohres liegt, an welcher sich das Luftrohr befindet, wird durch die Mittel, die normalerweise dem Verschliessen des Gerätes dienen, nun auch noch die gebrauchsgerechte Bedienung, d. h. schüttgerechte Kipprichtung, veranlasst.

Der Gegenstand der Erfindung ist nachstehend anhand zweier zeichnerisch veranschaulichter Ausführungsbeispiele näher erläutert. Es zeigt

Fig. 1 das mit dem Vorratsbehälter, beispielsweise einem Flaschenhals, verbundene Gerät in Seitenansicht und etwa natürlichem Massstab, gemäss dem ersten Ausführungsbeispiel,

Fig. 2 die Draufsicht hierzu,

Fig. 3 den Schnitt gemäss Linie III–III in Fig. 2, und zwar in gegenüber Fig. 2 vergrössertem Massstab,

Fig. 4 eine Teil-Draufsicht auf die ein oder mehrere Durchgusslöcher aufweisende Querwand,

Fig. 5 einen der Fig. 3 entsprechenden Schnitt in Spritz-Grundstellung (unmontiert) des einen Teils des Gerätes,

Fig. 6 bis 8 eine die Ausgabefunktion bildhaft erläuternde Bewegungsstudie in zur Verdeutlichung weitestgehender Schematisierung des Gerätes,

Fig. 9 das Gerät gemäss dem zweiten Ausführungsbeispiel in Schnittdarstellung wie Fig. 3,

Fig. 10 den Schnitt gemäss Linie x–x in Fig. 9 und

Fig. 11 bis 13 eine den Fig. 6–8 entsprechende Bewegungsstudie.

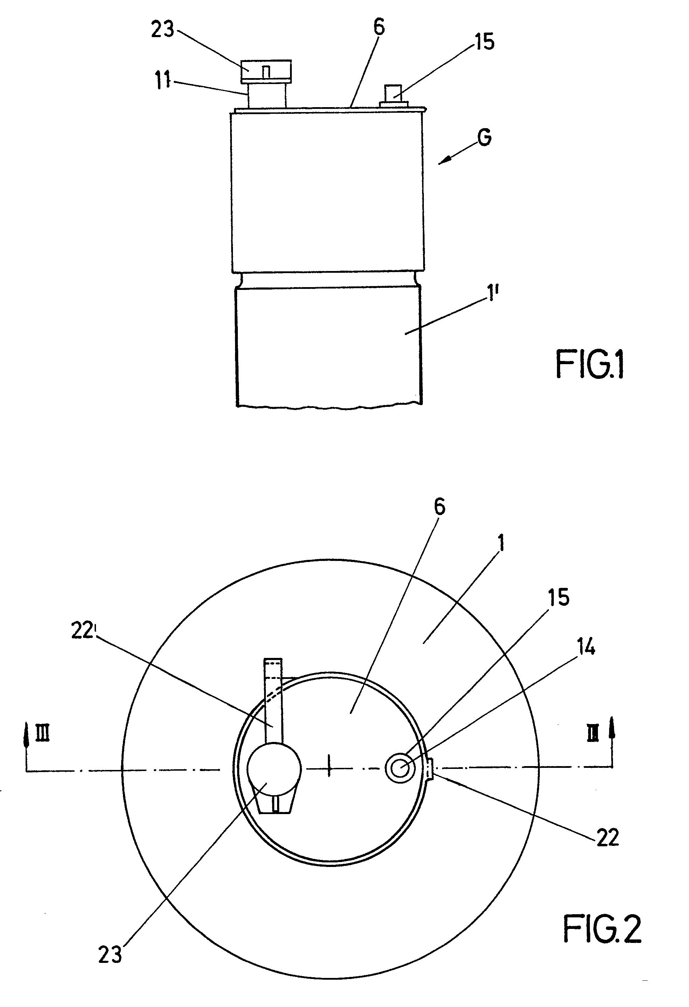

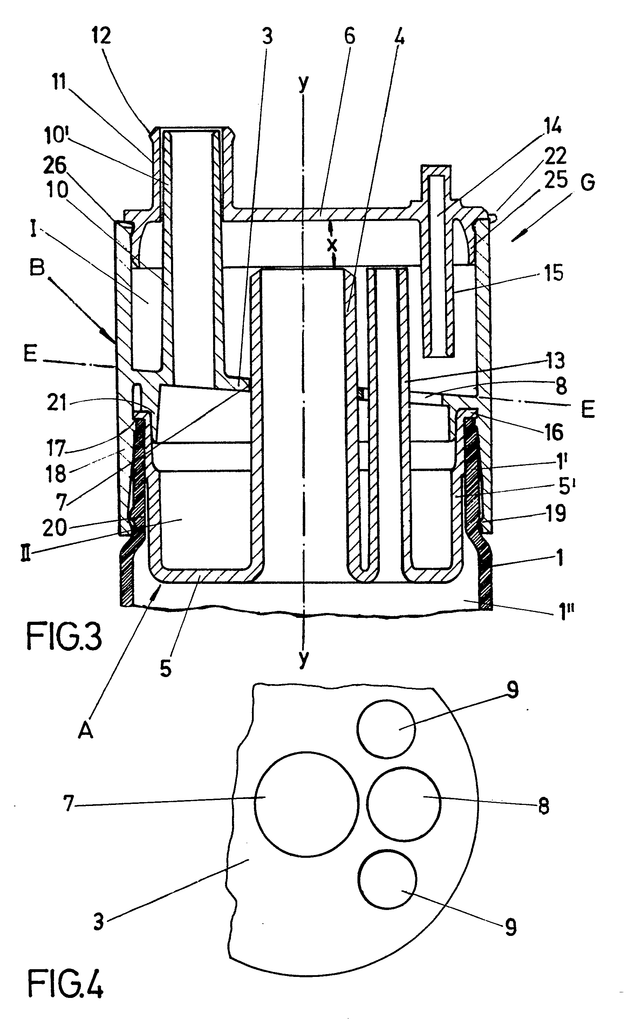

Bei dem Ausführungsbeispiel gemäss den Figuren 1 bis 8 besteht das auf den Hals 1' eines Vorratsbehälters 1 aufsetzbare Gerät zur dosierten Ausgabe von Flüssigkeit 2 aus einem topfförmigen Gehäuse G, das gemäss dem ersten Ausführungsbeispiel von einer mittelständigen Querwand 3 in eine Dosierkammer I und eine darunterliegende Ausgusskammer II unterteilt ist.

Die Dosierkammer I steht über ein Zulaufrohr 4 mit dem Vorratsbehälter-Innenraum 1'', also der Flüssigkeit 2 in Verbindung. Dieses Zulaufrohr geht aufwärtsgerichtet vom Topfboden 5 des Gerätes aus. Es bildet eine Art Einziehung. Das zentralliegende Zulaufrohr 4 endet im Abstand x vor der Decke 6 des topfförmigen Gehäuses G. Dieser Abstand x entspricht etwa dem Radius des lichten Zulaufrohr-Durchmessers. Zum Durchtritt des Zulaufrohres 4 weist die Querwand 3 eine entsprechend zentralliegende Durchbrechung 7 auf.

Die Querwand 3 erstreckt sich schwach geneigt zur Längsmittelachse y–y. Die mit E–E bezeichnete Querebene hat einen Neigungswinkel von ca. 8°. An tiefster Stelle befindet sich ein in der direkten Neigungsrichtung sowie Diagonalen liegendes Durchflussloch 8. Benachbarte Löcher 9 führen dort zu einer siebartigen Struktur. Das Durchflussloch 8 und die beiden anderen Löcher 9 ermöglichen ein schnelles Überwechseln der in die Dosierkammer I eingetretenen Flüssigkeit in die Ausgusskammer II.

An höchster Stelle der Querwand 3, ebenfalls in der direkten Neigungsrichtung liegend, erstreckt sich ein parallel zum Zulaufrohr 4 ausgerichtetes Mündungsrohr 10. Letzteres durchsetzt mit seinem freien Ende 10' einen Ausgiessstutzen 11 mit Tropflippe 12. Dieser Stutzen setzt sich, materialeinheitlich angeformt, im Anschluss an eine Durchbrechung in der Decke 6 des Gehäuses G nach oben hin fort. Das Mündungsrohr 10 ist strömungstechnisch unmittelbar mit der Ausgusskammer II verbunden. Der lichte Durchmesser des Mündungsrohres 10 entspricht dem halben Durchmesser des zentralliegenden Zulaufrohres 4.

Parallel verlaufend zum Zulaufrohr 4 steht ein Luftrohr 13. Letzteres geht ebenfalls vom Topfboden 5 aus und schliesst auch oben höhengleich mit dem Zulaufrohr ab. Es dient dem Luftaustausch und ist zum Vorratsbehälter-Innenraum 1'' hin offen.

Die Dosierkammer I steht über eine Lufteinlassöffnung 14 in der Decke 6 des Gehäuses G mit der Aussenluft in Verbindung. Gebildet ist die Lufteinlassöffnung 14 von einem der Decke angeformten Röhrchen 15. Letzteres erstreckt sich ebenfalls parallel zum Zulaufrohr 4 bzw. Luftrohr 13. Das Röhrchen 15 überragt die Decke in beiden Richtungen. Der freistehend in die Dosierkammer I ragende Röhrchenabschnitt endet kurz vor der tiefsten Stelle der Querwand, und zwar in einem Abstand, der dem mit x bezeichneten entspricht.

Der die Decke 6 überragende Abschnitt des Röhrchens 15 ist kürzer und ursprünglich geschlossen. Die Röhrchenhöhlung überragt aber die Decke, so dass der Röhrchenboden zur Ingebrauchnahme des Gerätes einfach abgeschnitten werden kann.

Die Ausgusskammer II ist als Ringkammer gestaltet, deren Ringraum bloss vom durch das Durchflussloch 8 hindurchgesteckten Luftrohr 13 durchsetzt ist. Die lichten Durchmesser vom Röhrchen 15 und Luftrohr 13 sind untereinander gleich. Sie weisen etwa den halben lichten Durchmesser des Mündungsrohres 10 auf.

Das Gehäuse G besteht aus zwei etwa auf Höhe der Querwand 3 miteinander verklipsten Teilen. Der eine Teil A besteht aus dem Topfboden 5 mit einer peripheren, nach oben gebogenen Ringwand 5', die sich in einen nach auswärts weisenden Ringrand 16 fortsetzt. Letzterer übergreift eine Klipsschulter 17 des anderen Teils B, der über die Querwand 3 nach unten hin verlängert ist und ebenfalls eine Ringwand 18 besitzt. Deren innenseitiger Endbereich bildet eine Ringrippe 19 aus, welche eine Rastrippe 20 des Behälterhalses 1' hintergreift.

Während der eine Teil A in den Hals 1' eingesenkt ist, umgreift der andere Teil B mit seiner Ringwand 18 den Hals von aussen her. Von der Unterseite der Querwand 3 geht sodann noch eine ringförmige Stützwand 21 aus, welche den Ringrand 16 hinterfängt.

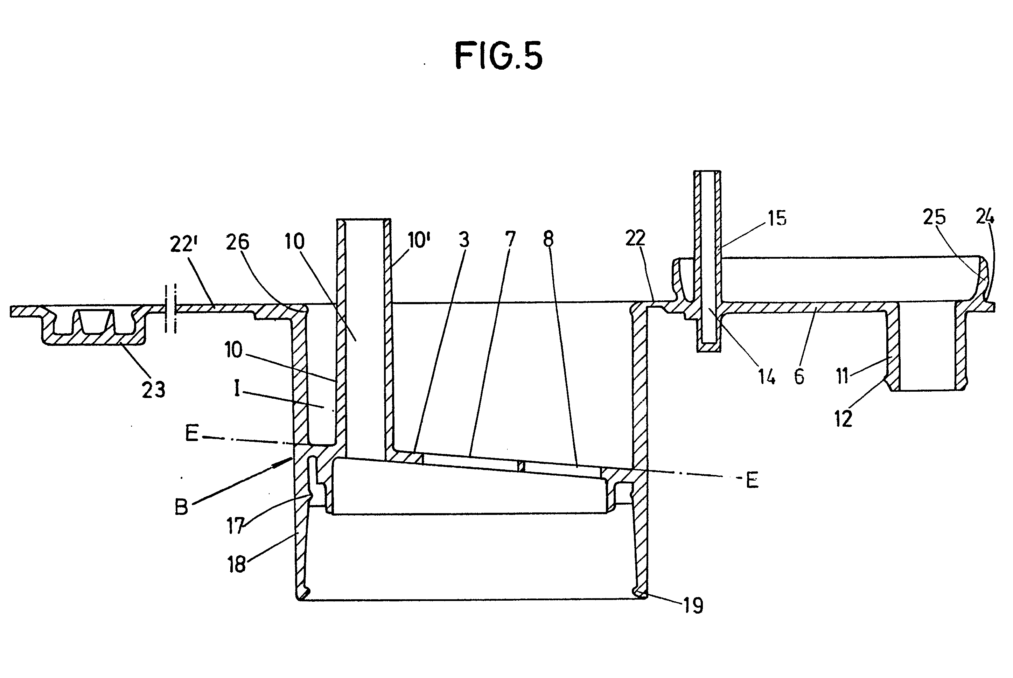

Die Decke 6 mit angeformtem Röhrchen 15 kann als separates Bauteil erstellt oder aber, wie dies aus Fig. 5 hervorgeht, über eine Materialbrücke 22 als Klappscharnier dem Teil B materialeinheitlich angeformt sein. Dies gilt auch bezüglich einer Verschlusskappe 23. Letztere ist an der der scharnierbildenden Materialbrücke 22 gegenüberliegenden Seite, also winkelversetzt, dargestellt und als langer Steg 22' gestaltet. Die tatsächliche Zuordnunglage ergibt sich aus Fig. 2.

Im peripheren Bereich der Decke 6 wurzelt innenseitig ein gegenüber dem Decken-Auflagerand 24 etwas zurückversetzter ringförmiger Steckvorsprung 25, dessen Aussenrand gefasst ist und dessen deckenseitiger äusserer Endbereich eine Ringnut formt, in die eine Ringrippe 26 des Gehäuses eintritt.

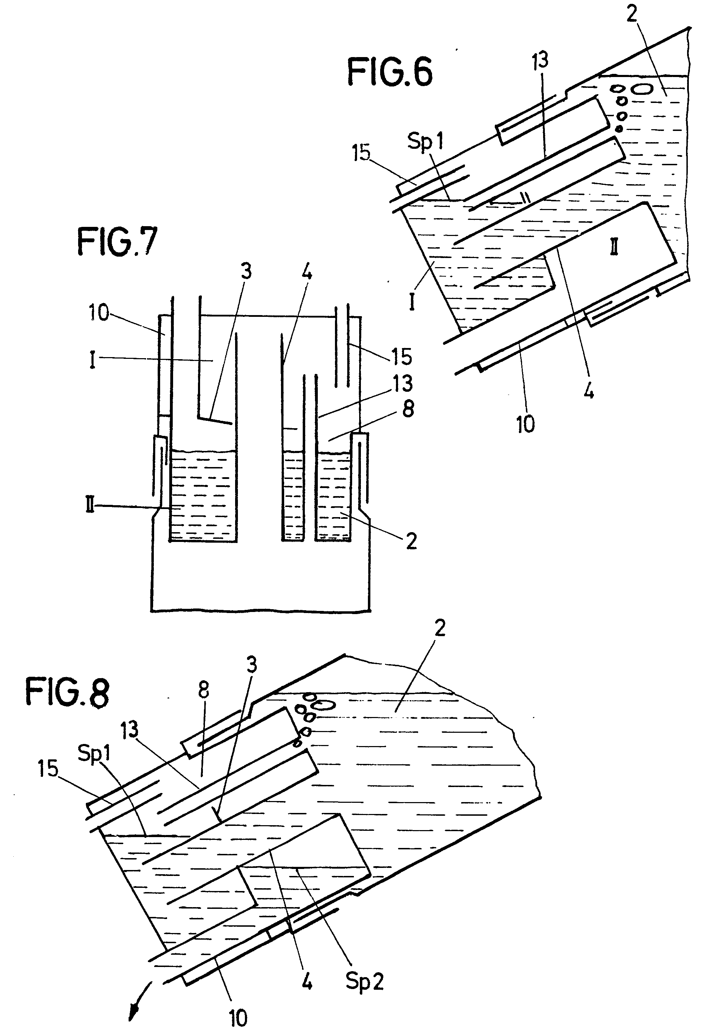

Die Funktion des Gerätes ist wie folgt: Der mit dem erfindungsgemässen Gerät bestückte Vorratsbehälter 1 wird in die aus Fig. 6 ersichtliche Kipplage gebracht, und zwar derart, dass das exzentrisch liegende Mündungsrohr 10 unten liegt. Der Kippneigungswinkel beträgt ca. 30°. Darüberliegend befindet sich in der folgenden Reihenfolge, und zwar die vertikale Längsmittelebene schneidend, das Zulaufrohr 4, das das Durchflussloch 8 frei durchsetzende Luftrohr 13 und das Röhrchen 15 mit Lufteinlassöffnung 14. In der gesagten Kipplage schiesst Flüssigkeit 2 in die Dosierkammer I. Luftausgleich erfolgt über die Lufteinlassöffnung 14 und das Luftrohr 13. Der Zulauf wird spontan unterbrochen, sobald das in Richtung der Decke 6 weisende freie Ende des Luftrohres 13 in den Flüssigkeitsspiegel Sp1 eintaucht. Dieser Spiegel hat dabei noch nicht den Rand des Durchflussloches 8 erreicht. Es kann also keine Flüssigkeit in die Ausgusskammer II gelangen. Nach diesem ersten Kippen in die Tieflage wird das Gerät wieder so gestellt, wie es sich aus Fig. 7 ergibt. In dieser normalen Standlage läuft die in die Dosierkammer I gelangte Flüssigkeit 2 über die schrägverlaufende Querwand 3 restlos in die Ausgusskammer II, dies unter Passieren des Durchflussloches 8 und ggfs. weiterer benachbarter Löcher 9.

Nun wird das Gerät erneut in etwa die gleiche Winkellage gekippt. Dabei wird die in die Ausgusskammer gelangte dosierte Menge über das zuunterst liegende Mündungsrohr 10 abgegeben. Der Flüssigkeitsspiegel Sp2 in der Ausgusskammer II senkt sich dabei ab. Der ausgegebene Volumenanteil wird durch über die Lufteinlassöffnung 14 in der Decke einströmende Luft ersetzt. Einhergehend füllt sich über das Zulaufrohr 4 wieder die Dosierkammer in der oben erläuterten Weise bis der Spiegel Sp1 den Luftaustausch über das Luftrohr 13 beendet.

Je nach der Länge des Luftrohres 13 kann die Dosiermenge vergrössert oder verringert werden, indem einfach die Luftzufuhr früher oder später unterbunden wird.

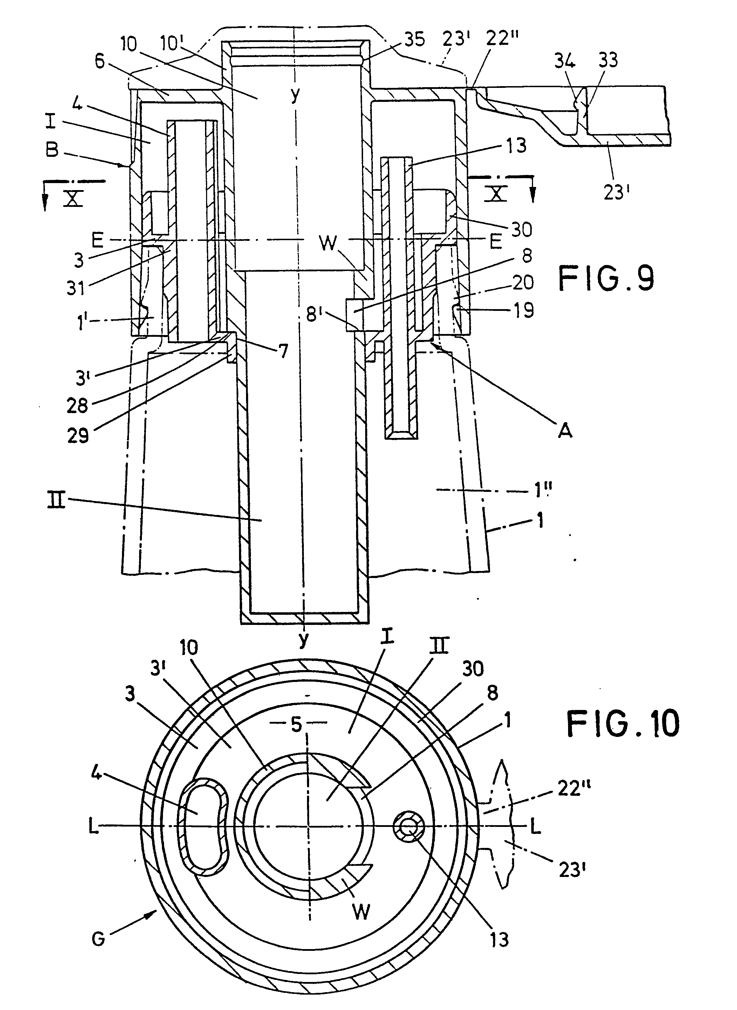

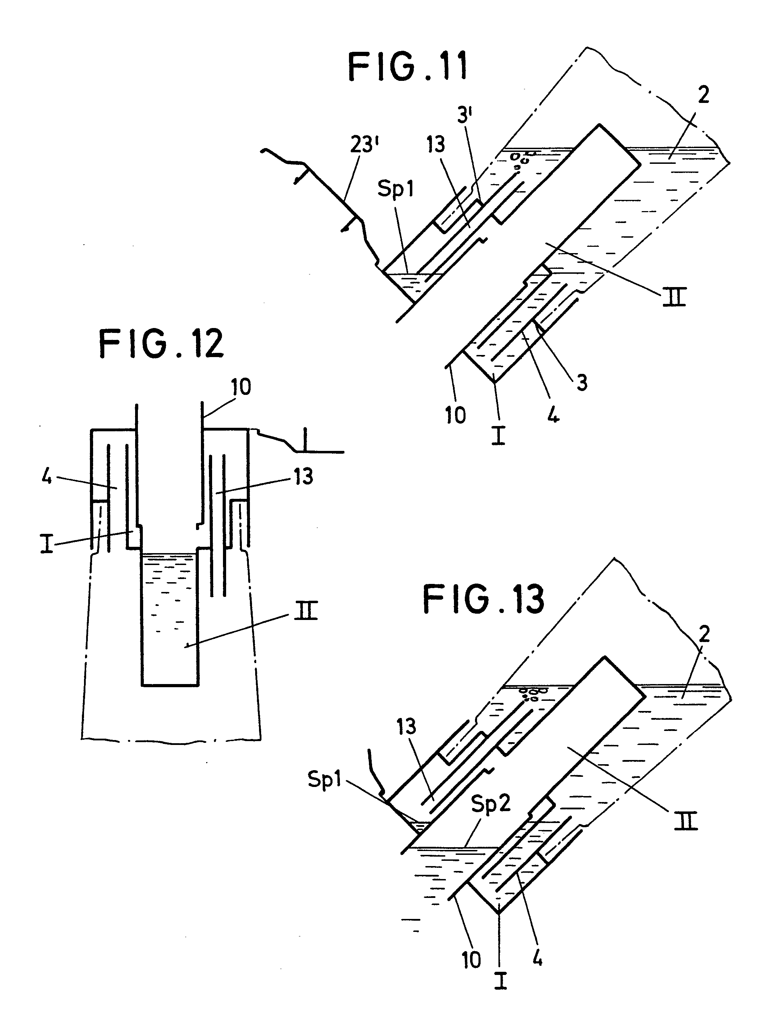

Beim Ausführungsbeispiel gemäss den Fig. 9 bis 13 ist unter Beibehaltung des erläuterten Grundprinzips so vorgegangen, dass die Dosierkammer I und das Mündungsrohr 10 konzentrisch zueinander im topfförmigen Gehäuse G angeordnet sind.

Das den Flüssigkeitsübertritt aus der Dosierkammer I in die Ausgusskammer II ermöglichende Durchflussloch 8 befindet sich nun nicht mehr in der Querwand 3, sondern in der die innere Ringwand des Ringraumes bildenden Dosierkammerwand W. Dieses Durchflussloch 8 erstreckt sich quergerichtet zur Längsmittelachse y–y des Geräts G. Es handelt sich um eine fensterförmige Öffnung, deren Breite etwa zwei Drittel des lichten Durchmessers der Ausgusskammer entspricht. Die Höhe des fensterförmigen Durchflussloches 8 entspricht etwa einem Drittel des lichten Durchmessers der Ausgusskammer.

Der lichte Durchmesser des sich nach oben hin anschliessenden Mündungsrohres 10 ist etwa um eine Wandungsstärke vergrössert. Das fensterförmige Durchflussloch 8 liegt im Bereich der so gedoppelten Wandungsdicke, so dass ein gutes Entformen ermöglicht ist. Die entsprechende Verdickung schliesst höhengleich mit der horizontal ausgerichteten unteren Fensterkante 8' ab.

Höhengleich hiermit ist eine Ringschulter 28 gebildet. Letztere ruht auf dem oberen Rand der zentralen Durchbrechung 7 der hier in zwei unterschiedlichen Ebenen verlaufenden Querwand. Die zentrale Durchbrechung 7 setzt sich nach unten hin in einen kurzen, eine Führung für die patronenförmig bzw. zylinderförmig gestaltete Ausgusskammer II bildenden, kurzen Stutzen 29 fort. Dies führt zugleich zu einer Versteifung des inneren, aus der mittleren Ebene E–E nach unten verlegten Abschnitts 3' der Querwand 3. Die höhengleiche Ausrichtung von Ringbund 28 und Fensterkante 8' bringt eine lagegerechte Steckzuordnung der beiden das Gehäuse G bildenden Teile A und B.

Neben einer durch die zentrale Durchbrechung 7 bewirkten Zentrierung ergibt sich eine zweite, im Bereich des höherliegenden Abschnitts der Querwand 3 bestehende Abstützung in Form einer peripheren Ringwand 30. Letztere stützt sich an der Innenfläche der die äussere Ringwand der Dosierkammer I bildenden Wandung des Gehäuses G ab. Zur erleichterten Steckzuordnung ist die äussere obere Randkante der Ringwand 30 gefast bzw. quergerundet. Hierdurch lässt sich auch die am innenseitigen Endbereich berücksichtigte Ringrippe 19 oder kurze Rastnase bei der Steckmontage leicht überwinden. Diese Ringrippe wirkt mit der Rastrippe 20 des Behälterhalses 1' zusammen. Unmittelbar auf dem Stirnrand des Halses 1' stützt sich der Teil A über den oberen Abschnitt der Querwand 3 ab.

Das exzentrisch liegende, dem zentralen Mündungsrohr 10 freistehend benachbarte, durchgehend offene Luftrohr 13 ragt mit etwa einem Drittel seiner Länge nach unten und etwa zwei Dritteln seiner Länge nach oben. Es endet kurz unterhalb der Decke 6 des Gehäuses G. Die Querschnittsmasse entsprechen im wesentlichen denen des oben erläuterten Ausführungsbeispieles.

In diametraler Gegenüberlage hierzu befindet sich das Zulaufrohr 4, welches in geringerem Abstand zur Decke 6 endet. Es handelt sich um ein flach ovales Rohr, dessen längere Ovalachse ebenfalls in konzentrischer Ausrichtung zum zentralliegenden Mündungsrohr 10 verläuft. Dieses Zulaufrohr 4 wurzelt in der topfbildenden, einwärts versetzten Ringwand 31 des Teiles A und steht praktisch erst oberhalb des oberen Abschnitts der Querwand 3 frei. Das dem Innenraum 1'' zugewandte Rohrende wurzelt im tieferliegenden Abschnitt 3' der Querwand 3 und schliesst mit dessen Unterseite offen ab.

Beim vorliegenden Ausführungsbeispiel ist die Decke 6 ganzflächig von einer Verschlusskappe 23' überfangen. Deren zentraler Klipsvorsprung 33 greift mit einer Ringrippe 34 in eine Innennut 35 am freistehenden Ende 10' des in der Decke 6 wurzelnden Mündungsrohres 10.

Die Verschlusskappe 23' ist über ein Filmscharnier 22" am Deckenrand fest anscharniert. Das Scharnier 22" liegt an derjenigen Seite des Mündungsrohres 10, auf welcher sich auch das Luftrohr 13 befindet. Diametral gegenüberliegend, auf einer in Fig. 10 mit L–L bezeichneten, die Längsmittelachse y–y kreuzenden Linie erstreckt sich das Zulaufrohr 4. Das führt zu einer folgerichtigen Ausgabe des Inhalts, da der Benutzer in der Regel nicht die Schüttrichtung wählt, in der das Schüttgut auf den Verschlussdeckel trifft.

Die Funktionsweise dieses Gerätes entspricht der oben erläuterten, nur das hier ein Kippwinkel von 45° zugrundegelegt wird und die Reihenfolge der Rohre unter Berücksichtigung des Zentralprinzips geändert ist. In Kipprichtung gesehen liegt nun das Zulaufrohr 4 zuunterst. Es folgt in Übereinanderlage das Mündungsrohr 10 und darüberliegend das Luftrohr 13. Ein Röhrchen 15 ist hier nicht verwendet.

## Patentansprüche

1. Gerät zur dosierten Ausgabe von Flüssigkeit aus einem Vorratsbehälter (1) durch ein Mündungsrohr (10) hindurch, wobei die Ausgabe erst beim zweiten Umwenden und in der Tieflage des Mündungsrohres erfolgt, wobei ein von einer Querwand (3) in eine oberseitig geschlossene Dosierkammer (I) und eine tieferliegende Ausgusskammer (II) unterteiltes topfförmiges Gehäuse (G) vorgesehen ist, wobei Ausgusskammer und Dosierkammer über ein Durchflussloch (8) miteinander verbunden sind, wobei die Querwand (3) von einem oberhalb derselben in die Dosierkammer (I) mündenden und unten zum Vorratsbehälter offenen Zulaufrohr (4) durchsetzt ist, welches von einem Mündungsrohr (10) überragt ist und das unten zum Vorratsbehälter (1) offen ist, und wobei ein die Querwand (3) durchsetzendes, vom Vorratsbehälter bis in die Dosierkammer (I) reichendes Luftrohr (13) vorgesehen ist, dadurch gekennzeichnet, dass die Dosierkammer (I) über eine Lufteinlassöffnung (14) direkt mit der Aussenluft in Verbindung steht.

2. Gerät nach Anspruch 1, dadurch gekennzeichnet, dass die Lufteinlassöffnung (14) der Dosierkammer (I) von einem in Nähe der Querwand (3) endenden, die Decke (6) des Gehäuses (G) durchsetzenden Röhrchens (15) gebildet ist und dass die Querwand (3) in der Mitte angeordnet ist.

3. Gerät nach Anspruch 1, dadurch gekennzeichnet, dass die Ausgusskammer (II) als Ringkammer gestaltet ist.

4. Gerät nach einem oder mehreren der vorhergehenden Ansprüche, dadurch gekennzeichnet, dass das Gehäuse (G) aus zwei etwa im Bereich der Querwand (3) verbundenen Teilen (A und B) besteht.

5. Gerät zur dosierten Ausgabe von Flüssigkeit aus einem Vorratsbehälter (1) durch ein Mündungsrohr (10) hindurch, wobei die Ausgabe erst beim zweiten Umwenden und in der Tieflage des Mündungsrohrs erfolgt, wobei ein von einer Querwand (3) in eine oberseitig geschlossene Dosierkammer (I) und eine tieferliegende Ausgusskammer (II) unterteiltes topfförmiges Gehäuse (G) vorgesehen ist, wobei Ausgusskammer und Dosierkammer über ein Durchflussloch (8) miteinander verbunden sind, wobei die Querwand (3) von einem oberhalb derselben in die Dosierkammer (I) mündenden und unten zum Vorratsbehälter offenen Zulaufrohr (4) durchsetzt ist, welches von einem Mündungsrohr (10) überragt ist und das unten zum Vorratsbehälter (1) offen ist, und wobei ein die Querwand (3) durchsetzendes, vom Vorratsbehälter bis in die Dosierkammer (I) reichendes Luftrohr (13) vorgesehen ist, dadurch gekennzeichnet, dass Dosierkammer (I) und Mündungsrohr (10) konzentrisch zueinander im topfförmigen Gehäuse (G) angeordnet sind und dass das sich radial ausgerichtet in der Dosierkammerwand (W) befindliche Durchflussloch (8) gleichzeitig die Lufteinlassöffnung zur Dosierkammer (I) bildet.

6. Gerät nach Anspruch 5, dadurch gekennzeichnet, dass die Querwand (3) in zwei unterschiedlichen Ebenen verläuft und die zentralliegende Ausgusskammer (II) patronenförmig über die Unterseite des topfförmigen Gehäuses (G) vorsteht.

7. Gerät nach Anspruch 5, dadurch gekennzeichnet, dass das zentrale Mündungsrohr (10) beabstandet von einer fest am Gehäuse (G) anscharnierten Verschlusskappe (23') angeordnet ist, deren Scharnier (22") auf derjenigen Seite des Mündungsrohres (10) liegt, an welcher sich das Luftrohr (13) befindet.

## Claims

1. A device for the metered delivery of liquid from a supply receptacle (1) through a delivery tube (10), delivery occurring only at the second reversal of the device and with the delivery tube (10) in the bottom position, a dished casing (G) being provided, the same being subdivided by a transverse wall (3) into a top closed dispensing chamber (I) and a lower pouring chamber (II), the pouring chamber and the dispensing chamber being interconnected by way of a flow aperture (8), the transverse wall (3) having extending through it a feed tube (4) which delivers above the wall (3) into the dispensing chamber (I) and which is open at the bottom to the supply receptacle, a delivery tube (10) extending beyond the feed tube (4), the same being open at the bottom to the supply receptacle (1), an air tube (13) being provided which extends from the supply receptacle to the dispensing chamber (I) through the transverse wall (3), characterised in that the dispensing chamber (I) communicates directly with the outside air by way of an air inlet orifice (14).

2. A device according to claim 1, characterised in that the air inlet opening (14) of the dispensing chamber (I) is a small tube (15) which terminates near the transverse wall (3) and extends through the top (6) of the casing (G), and the wall (3) is disposed at the centre.

3. A device according to claim 1, characterised in that the pouring chamber (II) is an annular chamber.

4. A device according to one or more of the previous claims, characterised in that the casing (G) comprises two parts (A and B) interconnected substantially in the region of the transverse wall (3).

5. A device for the metered delivery of liquid from a supply receptacle (1) through a delivery tube (10), delivery occurring only at the second reversal of the device and with the delivery tube (10) in the bottom position, a dished casing (G) being provided, the same being subdivided by a transverse wall (3) into a top closed dispensing chamber (I) and a lower pouring chamber (II), the pouring chamber and the dispensing chamber being interconnected by way of a flow aperture (8), the transverse wall (3) having extending through it a feed tube (4) which delivers above the wall (3) into the dispensing chamber (I) and which is open at the bottom to the supply receptacle, a delivery tube (10) extending beyond the feed tube (4), the same being open at the bottom to the supply receptacle (1), an air tube (13) being provided which extends from the supply receptacle to the dispensing chamber (I) through the transverse wall (3), characterised in that the dispensing chamber (I) and delivery tube (10) are disposed concentrically of one another in the dished casing (G), and the aperture (8) aligned radially in the dispensing chamber wall (W) is also operative as air inlet orifice for the dispensing chamber (I).

6. A device according to claim 5, characterised in that the transverse wall (3) extends in two different planes and the centrally disposed pouring chamber (II) projects like a cartridge beyond the bottom of the dished casing (G).

7. A device according to claim 5, characterised in that the central delivery tube (10) is disposed at a distance from a closure cap (23') which is fixedly hinged to the casing (G) and whose hinge (22'') is disposed on the same side of the delivery tube (10) as the air tube (30).

**Revendications**

1. Appareil destiné à verser du liquide de façon dosée, à partir d'un récipient de réserve (1) en le faisant passer par un tube d'orifice (10), le versage ne se produisant qu'au deuxième retournement et le tube d'orifice étant en position basse, dans lequel on prévoit un corps (G) en forme de pot subdivisé par une paroi transversale (3) en une chambre de dosage (I) fermée sur le dessus et en une chambre de versage (II) située en dessous, dans lequel la chambre de versage et la chambre de dosage communiquent entre elles par un trou (8) de passage d'écoulement, la paroi transversale (3) étant traversée par un tube d'alimentation (4) débouchant au-dessus de cette dernière dans la chambre de dosage (I) et étant ouvert dans le bas vers le récipient de réserve, qui est dépassé par un tube d'orifice (10) et est ouvert en bas vers le récipient de réserve (1), et dans lequel est prévu un tube à air (13) qui traverse la paroi transversale (3) et s'étend du récipient de réserve jusque dans la chambre de dosage (I), caractérisé en ce que la chambre de dosage (I) communique directement avec l'air extérieur par une ouverture (14) d'entrée d'air.

2. Appareil selon la revendication 1, caractérisé en ce que l'ouverture (14) d'entrée d'air de la chambre de dosage (I) est constituée par un petit tube se terminant à proximité de la paroi transversale (3) et traversant le couvercle (6) du corps (G) et que la paroi transversale (3) est disposée au milieu.

3. Appareil selon la revendication 1, caractérisé en ce que la chambre de versage (II) a une forme annulaire.

4. Appareil selon une ou plusieurs des revendications précédentes, caractérisé en ce que le corps (G) est constitué par deux parties (A et B) assemblées dans la zone de la paroi transversale (3).

5. Appareil destiné à verser du liquide de façon dosée à partir d'un récipient de réserve (1) en le faisant passer par un tube d'orifice (10) le versage ne se produisant qu'au deuxième retournement et le tube d'orifice étant en position basse, dans lequel on prévoit un corps (G) en forme de pot subdivisé par une paroi transversale (3) en une chambre de dosage (I) fermée sur le dessus et en une chambre de versage (II) située en dessous, dans lequel la chambre de versage et la chambre de dosage communiquent entre elles par un trou (8) de passage d'écoulement, la paroi transversale (3) étant traversée par un tube d'alimentation (4) débouchant au-dessus de cette dernière dans la chambre de dosage (I) et ouvert dans le bas vers le récipient de réserve, qui est dépassé en hauteur par un tube d'orifice (10) et est ouvert dans le bas vers le récipient de réserve (1) et dans lequel est prévu un tube à air (13) qui traverse la paroi transversale (3) et s'étend depuis le récipient de réserve jusque dans la chambre de dosage, caractérisé en ce que la chambre de dosage (I) et le tube d'orifice (10) sont disposés concentriquement l'un à l'autre dans le corps (G) en forme de pot et que le trou (8) de passage d'écoulement qui se trouve dans la paroi (W) de la chambre de dosage, en étant dirigé radialement, forme en même temps l'ouverture d'entrée d'air destinée à la chambre de dosage (I).

6. Appareil selon la revendication 5, caractérisé en ce que la paroi transversale (3) s'étend sur deux plans différents et que la chambre de versage (II) dépasse en forme de cartouche au-delà du côté inférieur du corps (G) en forme de pot.

7. Appareil selon la revendication 5, caractérisé en ce que le trou d'orifice central (10) est disposé à distance d'un capuchon de fermeture (23') monté sur charnière de façon fixe sur le corps (G) dont la charnière (22'') est placée à côté du trou d'orifice (10) où se trouve le tube à air (13).

FIG.1

FIG.2

FIG.3

FIG.4

# FIG.5

0 068 181

FIG.6

FIG.7

FIG.8

FIG.9

FIG.10

# FIG.11

# FIG.12

# FIG.13